# EUROPEAN PATENT APPLICATION

(11) **EP 4 459 427 A1**
(43) Date of publication of application: **06.11.2024**
(21) Application number: 22915738.3
(22) Date of filing: 15.12.2022
(51) Int. Cl.: G06F 3/01, G06F 3/0481, G06F 3/16, H04N 5/57, H04N 21/431, H04N 21/442, H04S 7/00

(54) **INFORMATION PROCESSING DEVICE, INFORMATION PROCESSING METHOD, AND PROGRAM**

(30) Priority: 28.12.2021 JP 2021214484
(71) Applicant: Sony Group Corporation, Tokyo 108-0075 (JP)
(72) Inventor: OKUMURA Kyosuke, Tokyo 108-0075 (JP); YOSHIDA Kazushi, Tokyo 108-0075 (JP); HONJI Hidetaka, Tokyo 108-0075 (JP); KITAHARA Soshi, Tokyo 108-0075 (JP); HAKOTANI Terunobu, Tokyo 108-0075 (JP); MASUDA Yusuke, Tokyo 108-0075 (JP); NAGURA Tomohiro, Tokyo 108-0075 (JP)
(74) Representative: 2SPL Patentanwälte PartG mbB
(86) International application number: PCT/JP2022/046143
(87) International publication number: WO 2023/127514

(57) **Abstract**

The present technology relates to an information processing device, an information processing method, and a program capable of providing video and sound with appropriate image quality and sound quality according to a viewing position of a user.

A control unit is provided which determines and controls an adjustment amount of at least one of an image quality of a display unit and a sound quality of a speaker on the basis of information regarding a viewing position of the user acquired from an imaging device. In a case where the viewing position is changed, the image quality is adjusted to luminance corresponding to the changed viewing position. In a case where the changed viewing position is farther than the viewing position before the change, the luminance of the display unit is increased, and in a case where the changed viewing position is closer than the viewing position before the change, the luminance is decreased. The present technology can be applied to, for example, a television receiver.

## Description

### TECHNICAL FIELD

The present technology relates to an information processing device, an information processing method, and a program, and for example, relates to an information processing device, an information processing method, and a program configured to adjust image quality and sound quality according to a viewing position of a user.

### BACKGROUND ART

High image quality and high sound quality of television receivers are in progress. Patent Document 1 has proposed that an external measurement sensor mode is provided in a digital video camera, and image quality and sound quality of a television receiver are controlled by the digital video camera.

### CITATION LIST

### PATENT DOCUMENT

Patent Document 1: Japanese Patent Application Laid-Open No. 2009-88626

### SUMMARY OF THE INVENTION

### PROBLEMS TO BE SOLVED BY THE INVENTION

Video and audio from the television receiver may vary depending on the viewing position of the user. In order to further improve the image quality and the sound quality of a television receiver, it is desired to be able to provide video and audio with optimum image quality and sound quality even when viewing from any position.

The present technology has been made in view of such a situation, and an object thereof is to provide an image and sound with image quality and sound quality according to a viewing position of a user.

### SOLUTIONS TO PROBLEMS

An information processing device according to one aspect of the present technology is an information processing device including a control unit that determines and controls an adjustment amount of at least one of image quality of a display unit or sound quality of a speaker on the basis of information regarding a viewing position of a user acquired from an imaging device.

An information processing method according to one aspect of the present technology is an information processing method for causing an information processing device to perform: determining an adjustment amount of at least one of an image quality of the display unit and a sound quality of a speaker on a basis of information regarding a viewing position of a user acquired from an imaging device; and controlling the display unit and the speaker using the adjustment amount.

A program according to one aspect of the present technology is a program for causing a computer to execute processing including the steps of: determining an adjustment amount of at least one of an image quality of a display unit and a sound quality of a speaker on a basis of information regarding a viewing position of a user acquired from an imaging device; and controlling the display unit and the speaker using the adjustment amount.

In the information processing device, the information processing method, and the program according to one aspect of the present technology, an adjustment amount of at least one of the image quality of the display unit and the sound quality of the speaker is determined and controlled on the basis of the information regarding the viewing position of the user acquired from the imaging device.

Note that the information processing device may be an independent device or may be an inner block including one device.

Note that a program to be provided may be transmitted via a transmission medium or be recorded on a recording medium.

### BRIEF DESCRIPTION OF DRAWINGS

Fig. 1 is a diagram illustrating a configuration example of an appearance of a television receiver according to an embodiment of the present technology.
Fig. 2 is a diagram illustrating a position with respect to the television receiver.
Fig. 3 is a functional block diagram of the television receiver.
Fig. 4 is a flowchart illustrating processing of an imaging device.
Fig. 5 is a flowchart illustrating processing of the television receiver.
Fig. 6 is a diagram illustrating image quality adjustment accompanying a change in a viewing position.
Fig. 7 is a diagram illustrating an example of a table related to image quality adjustment.
Fig. 8 is a view illustrating an example of a setting screen.
Fig. 9 is a view illustrating an example of the setting screen.
Fig. 10 is a view illustrating an example of the setting screen.
Fig. 11 is a diagram illustrating sound adjustment depending on a viewing position.
Fig. 12 is a diagram illustrating sound balance adjustment.
Fig. 13 is a diagram illustrating a delay amount of sound.
Fig. 14 is a diagram illustrating adjustment of speech enhancement.
Fig. 15 is a diagram illustrating a configuration example of a personal computer.

### MODE FOR CARRYING OUT THE INVENTION

Hereinafter, modes (hereinafter, referred to as embodiments) for implementing the present technology will be described.

### <Configuration Example of External Appearance of Television Receiver>

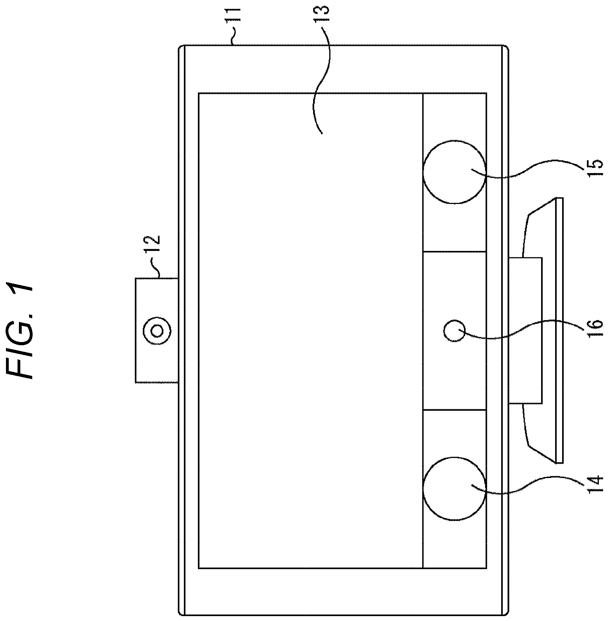

Fig. 1 is a diagram illustrating a configuration example of an appearance of a television receiver 11 as an information processing device according to an embodiment of the present technology.

Note that, here, the television receiver 11 will be described as an example, but the present technology can be applied to a device that outputs at least one of an image and a sound, and can also be applied to, for example, a display, a music reproducing device, and the like. As will be described later, these devices function as an information processing device that processes information from an imaging device 12, and function as a control device that controls output of video and audio on the basis of the processed information.

The television receiver 11 illustrated in Fig. 1 includes a display unit 13, a left speaker 14, a right speaker 15, and a sensor 16. An imaging device 12 is installed on an upper side of the television receiver 11 in the drawing.

The display unit 13 of the television receiver 11 includes a light emitting diode (LED), an organic light emitting diode (OLED), an organic electroluminescence (EL) display, and the like, and includes a display that displays an image (video). The left speaker 14 outputs, for example, sound from a left side of sound of stereo broadcasting, and the right speaker 15 outputs, for example, sound from a right side of sound of stereo broadcasting.

Note that left speaker 14 and right speaker 15 may be configured as screen vibration speakers. In this case, the television receiver 11 can output sounds of a plurality of channels corresponding to the left speaker 14 and the right speaker 15 by vibrating the display unit 13. In addition, the number of channels of the speaker is not limited to two on the left and right, and each of the left speaker 14 and the right speaker 15 may include a plurality of channels.

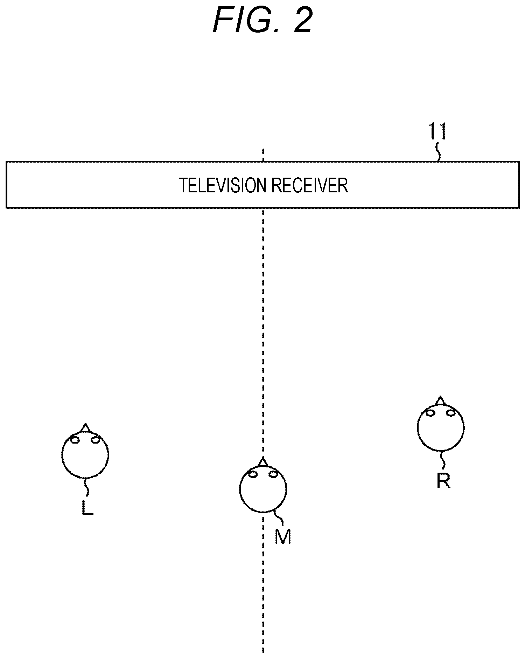

In the following description, left and right are left and right when the television receiver 11 is viewed from a user (viewer) as illustrated in Fig. 2. In the user M located at the center of the television receiver 11, when the user M faces the television receiver 11, one side on which the left hand of the user M is located is defined as left, and the other side on which the right hand of the user M is located is defined as right.

In Fig. 2, a user L is a user located on the left side, and a user R is a user located on the right side. In the following description, for example, in a case where it is described that the user is located on the right side, it is indicated that the user is located on the right side from the center of the television receiver 11 as illustrated as the user R in Fig. 2.

In a case where the user is viewing the television receiver 11, the left speaker 14 is a speaker that outputs sound desired to reach the left ear side of the user, and is installed on the left side of the television receiver 11. The right speaker 15 is a speaker that outputs sound desired to reach the right ear side of the user, and is installed on the right side of the television receiver 11.

The sensor 16 is a sensor disposed below the television receiver 11, and is, for example, an illuminance sensor or a luminance sensor that detects brightness.

An imaging device 12 is connected to the television receiver 11. The imaging device 12 may be built in the television receiver 11 or may be provided as an external device detachable from the television receiver 11. In a case where the imaging device 12 is configured to be detachable from the television receiver 11, the television receiver 11 and the imaging device 12 can be configured to be connected by, for example, a universal serial bus (USB). Here, a case where the imaging device 12 is connected to the television receiver 11 through a predetermined cable such as a USB will be described as an example.

### <Configuration Example of Television Receiver 11>

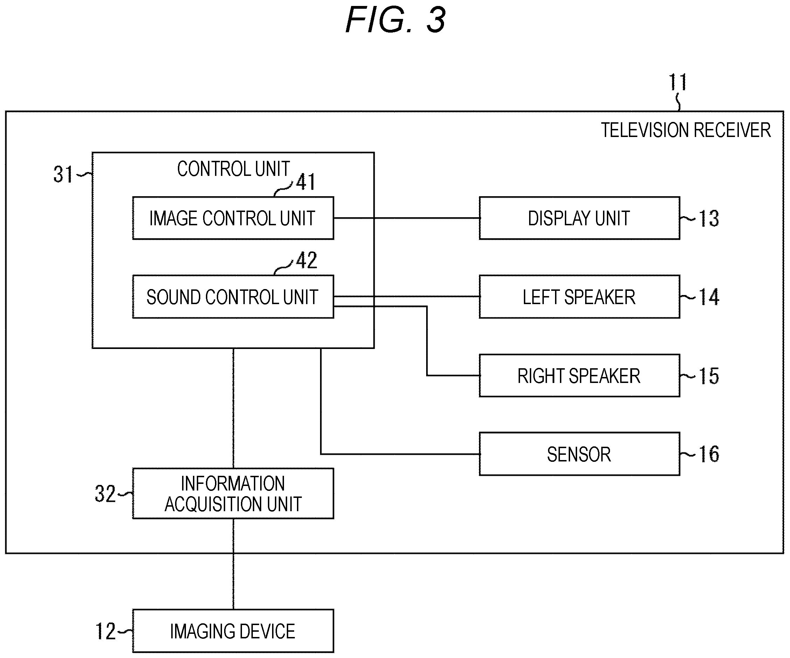

Fig. 3 is a diagram illustrating an internal configuration example of the television receiver 11.

The television receiver 11 includes a display unit 13, a left speaker 14, a right speaker 15, a sensor 16, a control unit 31, and an information acquisition unit 32. An imaging device 12 is connected to the television receiver 11. Note that Fig. 3 illustrates functions necessary for the following description, and does not illustrate other functions included as the television receiver 11, for example, a tuner, a communication unit that communicates with other devices through the Internet, and the like, but has a function as the television receiver 11.

The control unit 31 includes an image control unit 41 and a sound control unit 42. The image control unit 41 controls brightness and color density (luminance and saturation) of an image (video) displayed on the display unit 13. The sound control unit 42 controls a volume, a delay amount, and the like of sounds output from the left speaker 14 and the right speaker 15, respectively.

The information acquisition unit 32 has a function of acquiring information supplied from the imaging device 12 and supplying the acquired information to the control unit 31, and includes, for example, an interface for exchanging data by USB connection.

### <Processing of Imaging Device>

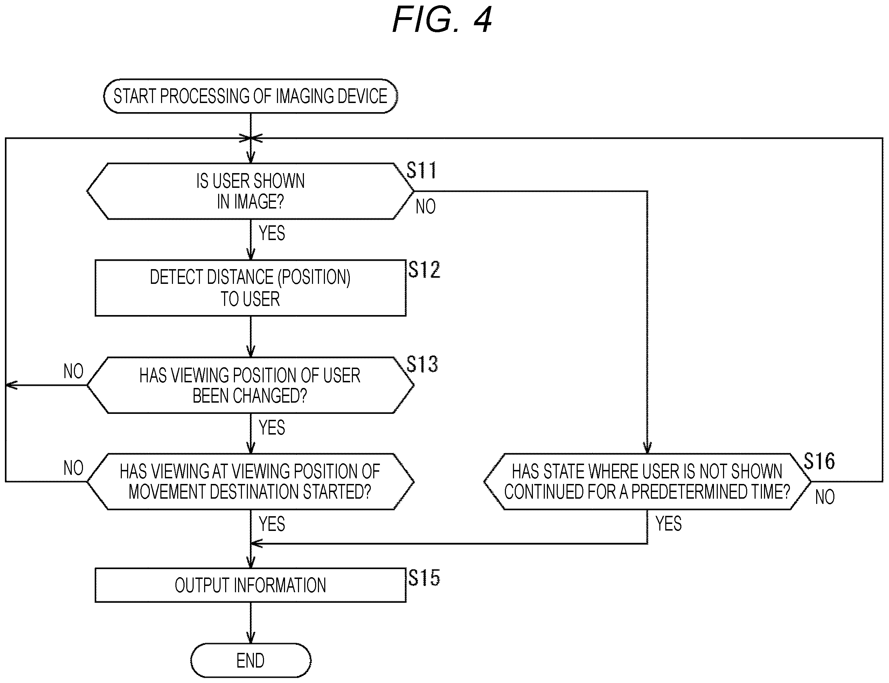

The processing of the imaging device 12 will be described with reference to a flowchart illustrated in Fig. 4. The imaging device 12 is a camera, has a function of capturing images at predetermined intervals and capturing moving images, and executes processing of the flowchart illustrated in Fig. 4 by analyzing the captured images.

In step S11, the imaging device 12 determines whether or not the user (viewer) is shown in a captured image. The imaging device 12 is interlocked with the television receiver 11, for example, and captures images at predetermined intervals when the television receiver 11 is powered on. The imaging device 12 analyzes the captured image and determines whether or not the user (viewer) is shown in the image.

In a case where it is determined in step S11 that the user is shown in the captured image, the processing proceeds to step S12.

In step S12, a distance to the user (the viewing position of the user) is detected. As the imaging device 12, a distance measuring sensor that detects the distance to the user can also be used.

In step S13, it is determined whether or not the viewing position of the user has been changed. In order to determine whether or not the viewing position of the user has been changed, the imaging device 12 includes a storage unit that stores one or more pieces of image data (frames). The imaging device 12 compares a position of the user detected from the image stored in the storage unit with a position of the user detected from the captured image, and detects whether or not the viewing position of the user has moved.

For the detection of whether or not the viewing position of the user has been changed, a body portion or a head portion of the user may be detected, movement of the body portion or the head portion of the user may be detected, and in a case where the viewing position of the user has moved by a predetermined distance or more, it may be determined that the viewing position of the user has been changed.

A direction of the user's face may be detected, whether or not the direction of the face has changed may be detected, and whether or not the face is facing the television receiver 11 may also be determined.

As will be described later, in a case where the viewing position of the user has been changed, the image quality and the sound quality are adjusted to be suitable for the viewing position after the movement. Any accuracy may be used as long as the accuracy can detect the movement of the viewing position of the user for performing such adjustment.

As will be described later, in a case where it is determined that the user is at a position where the user can view and listen but is not viewing, for example, a process of reducing the luminance of the display unit 13, in other words, a process for reducing power consumption is performed. In order to perform such processing, the direction of the face of the user is detected, and the viewing position of the user is detected with accuracy with which it can be determined that the user is not facing the television receiver 11 side, in other words, the user is not viewing. In this case, the direction of the face may also be detected.

Note that, here, a case where both the image quality and the audio are adjusted will be described as an example, but the present technology can also be applied to a case where at least one of the image quality and the audio is adjusted. Furthermore, the adjustment of the image quality and the audio is performed by determining an adjustment amount regarding the image quality and the audio according to the viewing position.

In a case where it is determined in step S13 that the viewing position of the user has been changed, the processing proceeds to step S14. In step S14, it is determined whether or not the user has started viewing at the viewing position of a movement destination.

The determination in step S14 is performed by determining whether or not a time when it is determined that the viewing position has been changed and it is determined that the user is not moved from the viewing position of the change destination has elapsed by a predetermined time. In order to perform such determination, an image may be captured when a predetermined time has elapsed, the viewing position of the user may be detected, and whether or not there is a change in the detected viewing position may be determined.

As described above, in a case where the viewing position of the user has been changed, processing of adjusting the image quality or the sound quality suitable for the viewing position of the movement destination is executed. In a case where the image quality and the sound quality are changed immediately after it is determined that the viewing position of the user has moved, for example, even when the user moves for a short time to take a nearby object and returns to an original position again, there is a possibility that the image quality and the sound quality are adjusted with the movement, and such adjustment is frequently performed.

In a case where it is determined that the user has changed the viewing position by excluding the occurrence of a situation in which the image quality and the sound quality are frequently adjusted, the processing of step S14 is executed in order to perform adjustment.

In a case where it is determined in step S14 that the user has not moved from the viewing position of the movement destination for the predetermined time and it is determined that the user has started viewing at the viewing position of the movement destination, the processing proceeds to step S15.

In step S15, information is output from the imaging device 12 to the television receiver 11 side. The output information includes at least information related to the viewing position of the user. The information regarding the viewing position of the user includes a distance between the television receiver 11 and the viewing position of the user, an angle of the viewing position when the center of the television receiver 11 is set to 0 degrees, and the like.

The information output from the imaging device 12 may also include determination results of step S11, step S13, step S14, and step S16 (described later).

Note that, here, it has been described that the information is output in a case where it is determined in step S14 that the user has changed the viewing position. In other words, a case where the information is not output in a case where it is not determined that the user has changed the viewing position has been described as an example. However, the timing of outputting the information from the imaging device 12 may be other than such a timing.

For example, the information from the imaging device 12 may be output to the television receiver 11 side at predetermined intervals regardless of the change in the viewing position of the user.

On the other hand, in a case where it is determined in step S14 that the viewing at the viewing position of the movement destination has not been started, the processing returns to step S11, and the subsequent processing are repeated.

On the other hand, in a case where it is determined in step S13 that the viewing position of the user has not been changed, the processing returns to step S11, and the subsequent processing is repeated.

On the other hand, in a case where it is determined in step S11 that the user is not shown in the screen, the processing proceeds to step S16.

In step S16, it is determined whether or not the state in which no image is shown has continued for a predetermined time. In a case where it is determined that the user is not viewing, the determination in step S16 is performed in order to execute a power consumption reduction process on the television receiver 11 side.

For example, in a case where the user leaves the viewing position and moves out of the range imaged by the imaging device 12, it is determined that the user is not viewing. In addition, also in a case where a situation in which the direction of the face of the user is not directed toward the television receiver 11 occurs for a predetermined time, it is determined that the user is not viewing.

As an example for making such a determination, in step S16, it is determined whether or not a state in which the user is not shown in the captured image has passed a predetermined time. This determination may also include a determination as to whether or not a state in which the direction of the face of the user shown in the captured image is not the direction on the television receiver 11 side has continued for a predetermined time.

In a case where it is determined in step S16 that the state in which the user is not shown in the captured image has passed the predetermined time, the processing proceeds to step S15. In this case, in step S15, information including at least information that it is determined that the user is not in the viewing state is output from the imaging device 12 to the television receiver 11. The information indicating that it is determined that the user is not viewing may be information indicating that the viewing position of the user is outside the imaging range.

In this manner, the processing in the imaging device 12 is performed, and the information regarding the viewing position of the user and the information regarding the viewing state of the user are output from the imaging device 12 to the television receiver 11.

Note that, here, it has been described that the processing illustrated in Fig. 4 is performed on the imaging device 12 side, but it is also possible to configure such that all or a part of the processing illustrated in Fig. 4 is executed on the television receiver 11 side. For example, image data of a captured image is supplied from the imaging device 12 to the television receiver 11, and the television receiver 11 side can analyze the supplied image and determine the viewing position, the viewing state, and the like of the user.

### <Processing of Television Receiver>

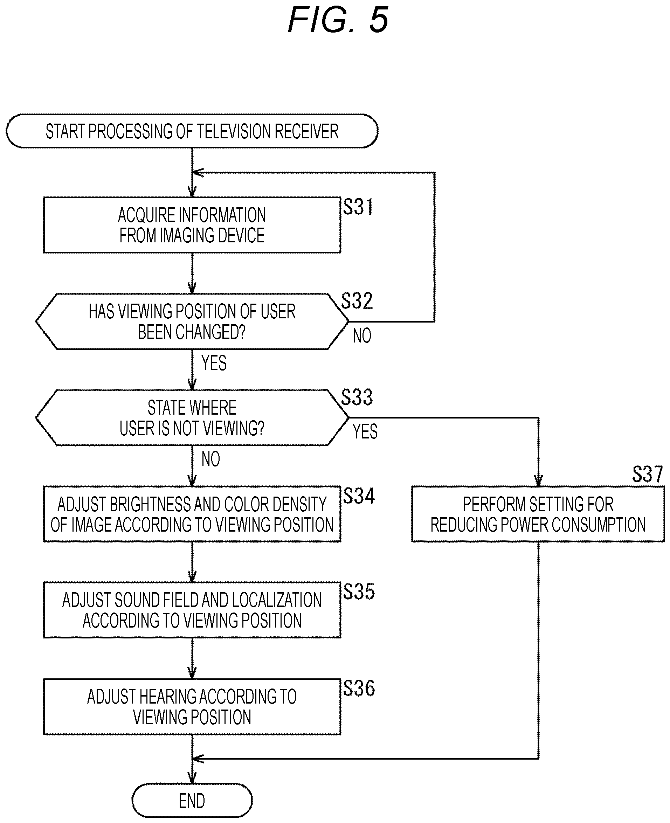

Processing of the television receiver 11 will be described with reference to a flowchart of Fig. 5.

In step S31, the information acquisition unit 32 of the television receiver 11 acquires information output from the imaging device 12. For example, in a case where information is output from the imaging device 12 in a case where it is determined on the imaging device 12 side that there is a change in the viewing position or the viewing state of the user, the information acquisition unit 32 acquires the information from the imaging device 12 at such timing.

In a case where the imaging device 12 side is configured to output information at predetermined intervals, the information acquisition unit 32 acquires information from the imaging device 12 every time the predetermined interval elapses. The information from the imaging device 12 acquired by the information acquisition unit 32 is supplied to the control unit 31.

In step S32, the control unit 31 determines whether or not there is a change in the viewing position of the user. In a case where the information from the imaging device 12 includes information indicating whether or not there is a change in the viewing position of the user, the determination is made with reference to the information. In a case where information is output from the imaging device 12 only when there is a change in the viewing position of the user, the processing can be omitted in step S32.

In a case where it is determined in step S32 that there is no change in the viewing position of the user, the processing returns to step S31, and the subsequent processing is repeated. On the other hand, in a case where it is determined in step S32 that there is a change in the viewing position of the user, the processing proceeds to step S33.

In step S33, it is determined whether or not the user is in a state of not viewing. Also in this determination, in a case where the information from the imaging device 12 includes information indicating whether or not the user is in a state of not viewing, the determination is performed with reference to the information. In a case where information is output from the imaging device 12 only when there is a change in the viewing state of the user, the processing of step S33 can be omitted.

In a case where it is determined in step S33 that the user is not in a state of not viewing, in other words, the user is in a state of viewing, the processing proceeds to step S34.

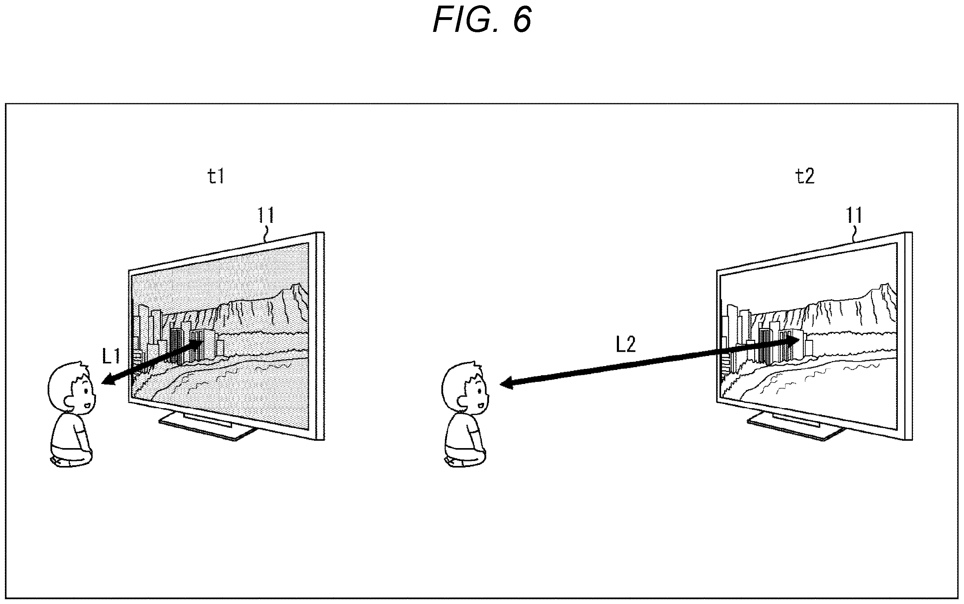

In step S34, adjustment of the image quality according to the viewing position, here, adjustment regarding the brightness and color density (luminance and saturation) of the image is performed. In a case where the user has changed the viewing position, the image control unit 41 performs image quality setting suitable for the viewing position of the change destination. This will be described with reference to Fig. 6.

At time t1, the user is viewing at a position away from the television receiver 11 by a distance L1. At time t2, the user has changed the viewing position to a position separated from the television receiver 11 by a distance L2, and started viewing at that position. It is assumed that the distance L1 is shorter than the distance L2. That is, a case where the user has changed the viewing position to a position far from the television receiver 11 at time t1 to time t2 will be described as an example.

At time t1, the image control unit 41 of the television receiver 11 adjusts brightness (luminance) and color density (saturation) to provide an image (video) with optimum image quality for the user viewing at the distance L1, and controls display of the image displayed on the display unit 13. In a case where the viewing position of the user has changed in a direction away from the television receiver 11 at the time t2, the image control unit 41 performs adjustment to change the brightness to a bright setting (setting to increase luminance) and change the color density to a dark setting (setting to increase saturation) in order to provide an image (video) with optimum image quality for the user viewing at the distance L2, and controls display of the image displayed on the display unit 13 with the adjusted setting value.

In a case where the viewing position is close, the brightness is set to be dark so that the user is not dazzled. In a case where the viewing position is far, the brightness is set to be bright. When the screen becomes brighter, the color appears lighter, so that the color density is increased. In this manner, the brightness and color density of the screen is adjusted in accordance with the viewing position, that is, the distance from the television receiver 11, it is possible to provide an image with high image quality that is easy for the user to view.

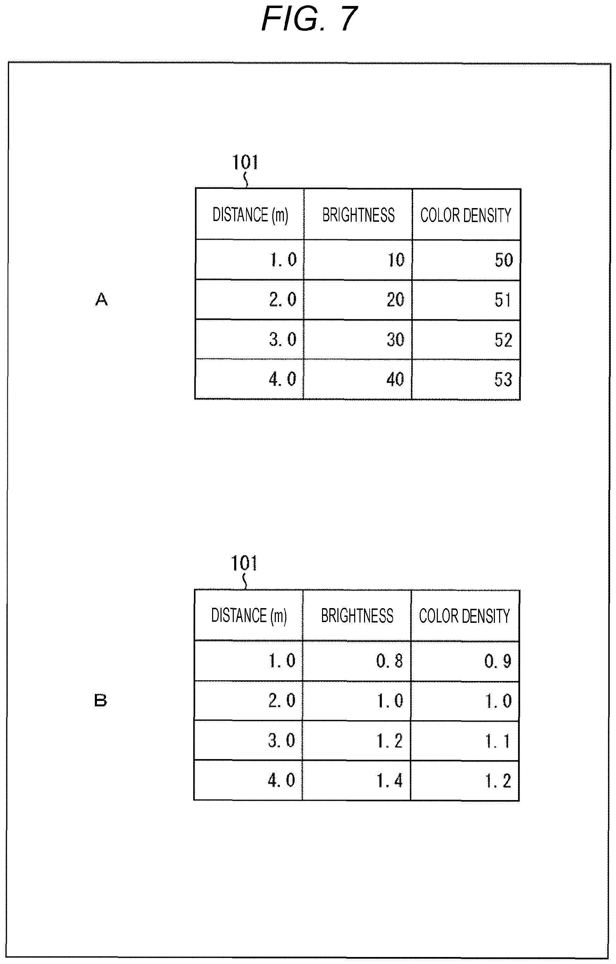

In order to perform such adjustment of the brightness and the color density, the image control unit 41 of the television receiver 11 holds a table as illustrated in Fig. 7, for example, and performs adjustment of the brightness and the color density by referring to the table as necessary.

Referring to the table 101 illustrated in Fig. 7, the table 101 is a table in which the distance, the brightness, and the color density are associated with each other. In the table 101 illustrated in Fig. 7, numerical values of "1.0", "2.0", "3.0", and "4.0" are written as the distances.

In the distance "1.0" in the table 101 illustrated in A of Fig. 7, "10" is associated as the brightness, and "50" is associated as the color density. To the distance "2.0", "20" is associated as brightness, and "51" is associated as color density. To the distance "3.0", "30" is associated as brightness, and "52" is associated as color density. To the distance "4.0", "40" is associated as brightness, and "53" is associated as color density.

The numerical value is an example, and is not a description indicating a limitation. The same applies to the other tables described below, and the numerical value is an example and does not indicate a limitation.

In the example illustrated in A of Fig. 7, the larger the numerical value of the brightness, the brighter the display (the higher the luminance), and the larger the numerical value of the color density, the darker the color.

For example, in a case where the viewing position is 1.0 m away from the television receiver 11, the image control unit 41 sets the brightness to 10, sets the color density to 50, and controls the display unit 13. In a case where it is determined that the viewing position has changed from 1.0 m to 3.0 m, the image control unit 41 changes the brightness from 10 to 30, changes the color density from 50 to 53, and starts the control of the display unit 13.

That is, in this case, when the viewing distance increases, the brightness is controlled to be changed from 10 to 30 to be displayed brightly, and the color density is controlled to be changed from 50 to 53 to be displayed darkly.

For example, when the brightness is changed from 10 to 30, control to change the brightness from 10 to 30 at once may be performed, or control may be performed while gradually increasing the value from 10 to 30, for example, by 1.

The image control unit 41 controls display on the display unit 13 on the basis of the table 101 in which the viewing position (distance), the brightness, and the color density are set in a one-to-one relationship in this manner.

B of Fig. 7 illustrates a configuration of another table 101. In the distance "1.0" in the table 101 illustrated in B of Fig. 7, "0.8" is associated as the brightness, and "0.9" is associated as the color density. To the distance "2.0", "1.0" is associated as brightness, and "1.0" is associated as color density. To the distance "3.0", "1.2" is associated as brightness, and "1.1" is associated as color density. To the distance "4.0", "1.4" is associated as brightness, and "1.2" is associated as color density.

The numerical values described in the fields of brightness and color density are multiplication rates with respect to the reference value. The reference value can be a preset value. The preset value may be a value set by the user. The table 101 illustrated in B of Fig. 7 is an example in which brightness and color density in a case where the distance is 2 m are used as reference values. When the viewing position is 2.0 m, the reference value (the setting value set by the user) is multiplied by 1.0, so that the reference value is used as a result.

For example, in a case where the viewing position is 1.0 m away from the television receiver 11, the image control unit 41 sets the brightness to a value calculated by "Reference value × 0.8", sets the color density to a value calculated by "Reference value × 0.9", and controls the display unit 13. In a case where it is determined that the viewing position has changed from 1.0 m to 3.0 m, the image control unit 41 sets the brightness to a value calculated by "reference value × 1.2", changes the color density to a value calculated by "reference value × 1.1", and starts the control of the display unit 13.

As in this example, when the brightness is changed from "reference value × 0.8" (= value A) to "reference value × 1.1" (= value B), control to change the value A to the value B at once may be performed, or the multiplication rate may be gradually increased from the value A to the value B, for example, by 0.05, and the control may be performed while performing multiplication with the reference value.

In the example of the table 101 illustrated in B of Fig. 7, the value to be multiplied by the reference value is described, but a table in which a value to be added to the reference value is described may be used. Although not illustrated, for example, in a case where the brightness associated with the distance of 1.0 is "-10", when the viewing position is 1.0, the value of the brightness is set to the value calculated by "reference value + (-10)". For example, in a case where the brightness associated with the distance of 3.0 is "10", when the viewing position is 3.0, the value of the brightness is set to the value calculated by "reference value + 10".

The table 101 illustrated here is an example, and other tables may be prepared and referred to. Here, it has been described that the values of brightness and color density are set by holding and referring to the table 101, but the respective values of brightness and color density can be set by a method other than holding and referring to the table 101. For example, a mechanism in which a value is calculated using an arithmetic expression including a distance may be used.

Note that, although the case where the brightness and the color density are adjusted has been described as an example, only one of the brightness and the color density can be adjusted. In addition, it is also possible to perform adjustment relating to image quality other than brightness and color density.

In this manner, control is performed such that an image with optimum brightness and color density for the user is displayed on the display unit 13 depending on the viewing position. In a case where the viewing position has been changed, a value relating to image quality such as brightness or color density is adjusted according to the change so that an image is obtained with optimum brightness or color density for the user. Therefore, it is possible to provide an image with optimum image quality for the user regardless of the viewing position of the user.

### <Coexistence with Sensor>

In a case where the television receiver 11 includes the sensor 16 (Figs. 1 and 2), the brightness may be set using information from the sensor 16. The sensor 16 is, for example, a sensor that detects brightness in front of the television receiver 11, in other words, ambient light in a place where the television receiver 11 is installed. It can be configured to have a function of controlling the brightness of display on the display unit 13 of the television receiver 11 according to the intensity (brightness) of the ambient light detected by the sensor 16.

For example, in a case where the brightness detected by the sensor 16 is bright, the display on the display unit 13 can be controlled to be bright, and in a case where the brightness is dark, the display on the display unit 13 can be controlled to be dark. In a case where such display of the display unit 13 is controlled by the information obtained from the sensor 16, adjustment by the information (hereinafter, the sensor information will be described as appropriate.) obtained from the sensor 16 and adjustment by the information (hereinafter, the camera information will be described as appropriate) obtained from the imaging device 12 may be performed together.

For example, a value set on the basis of the sensor information can be adjusted on the basis of the camera information. Alternatively, a value set on the basis of the camera information can be adjusted on the basis of the sensor information.

For example, it is possible to set the control values of brightness and color density by performing predetermined calculation of multiplying or adding the value B set on the basis of the camera information to the value A set on the basis of the sensor information.

Alternatively, for example, a predetermined calculation of multiplying or adding the value D set on the basis of the sensor information to the value C set on the basis of the camera information is performed, whereby the control value of the brightness or color density can be set.

Alternatively, the setting may be such that one of the brightness control based on the sensor information and the brightness control based on the camera information is preferentially performed.

Note that, in a case where the setting values related to the brightness and color density of the display unit 13 are set using such sensor information and camera information, the table 101 described with reference to Fig. 7 may hold the table 101 in a case where the setting values are set only with the camera information and the table 101 in a case where the setting values are set using the sensor information and the camera information.

In a case where processing using the sensor information from the sensor 16 and the camera information from the imaging device 12 is performed, or in a case where processing using the camera information from the imaging device 12 is performed, processing of detecting the state of reflection on the display unit 13 of the television receiver 11 and reducing the influence of the reflection may be executed.

The imaging device 12 may acquire information of a place where the television receiver 11 is installed, for example, information (information related to reflected light from a wall) such as a position and brightness of illumination and a color of wallpaper, analyze the information to detect a degree of reflection of peripheral light and peripheral objects on the display unit 13, and set brightness, color density, and the like for reducing the reflection.

For example, on the display unit 13, display control is performed such that a portion in which a peripheral object or peripheral light is reflected is brighter or has a darker color than other portions. Furthermore, the information on the place where the television receiver 11 is installed may be acquired from, for example, an imaging device other than the imaging device 12 such as a smartphone, or may be acquired using information from a smartphone or the like.

### <Setting Screen>

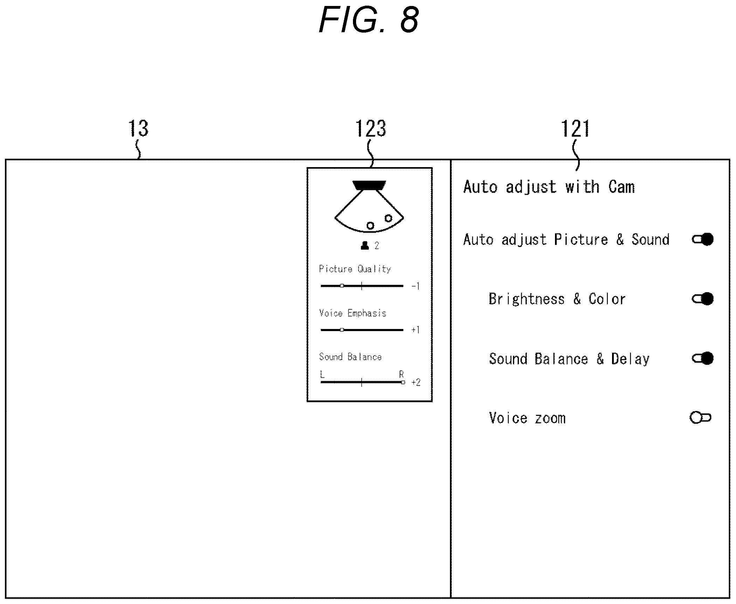

As a mode for adjusting brightness and color tone, a mode to be set using only sensor information, a mode to be set using only sensor information and camera information, a mode to be set using only camera information, or the like may be prepared, and a desired mode may be selected by the user. The selection is performed, for example, by presenting a screen as illustrated in Fig. 8 to the user.

Fig. 8 is a screen example that is displayed on the display unit 13 and on which it is possible to select and set whether or not to perform processing using the camera information. In an upper part of a setting screen 121 displayed on a right side of the display unit 13 in the figure, "Auto adjust with cam" is displayed, indicating that it is a menu screen on which whether or not to automatically adjust the image quality on the basis of the camera information from the imaging device 12 (without bothering the user) can be set.

An item name "Auto adjust Picture & Sound" and a switch for turning on or off the setting are displayed. An item "Auto adjust Picture & Sound" is an item for collectively setting brightness and color density based on camera information, and whether or not to adjust sound to be described later. When the switch in this item is turned on, a mode is set in which adjustment of image quality based on camera information from the imaging device 12 is performed. In a case where this item is turned on and adjustment is performed using the sensor information, a mode is set in which adjustment using both the sensor information and the camera information is performed.

Below an item "Auto adjust Picture & Sound", items "Brightness & Color", "Sound Balance & Delay", and "Voice zoom" are provided. These three items are prepared as items for enabling selection of whether or not to individually perform adjustment even in a case where adjustment based on the camera information is set.

An item "Brightness & Color" is an item for setting whether or not to adjust brightness and color density based on camera information. The switch in this item is basically turned on when the item "Auto adjust Picture & Sound" is turned on, but is set off by the user when the user does not desire to adjust the brightness and color tone.

As will be described later, the sound is also adjusted on the basis of the camera information, in other words, on the basis of the viewing position of the user. As the adjustment of the sound, adjustment of the volume of the sound output from the left speaker 14 and the volume of the sound output from the right speaker 15, which are suitable for the viewing position of the user, adjustment of the time difference between the right and left until the sound reaches the user, and adjustment related to a function of clearly hearing a voice, here, a function described as voice zoom (Voice Zoom) are performed.

The item "Sound Balance & Delay" is an item for setting whether or not to adjust the left-right balance and the delay amount of the sound on the basis of the camera information. In a case where it is desired not to adjust the right and left balance and the delay amount of the sound suitable for the viewing position, the switch of this item is turned off.

An item "Voice Zoom" is an item for setting whether or not to perform voice processing in which voice is emphasized on the basis of camera information. In a case where it is desired not to perform the voice processing in which the voice suitable for the viewing position is emphasized, the switch of this item is turned off. In addition, in a case where the setting of not performing the voice processing (Voice Zoom function) in which the voice is emphasized is set by the user on another setting screen, this item is set to OFF.

A state display screen 123 is displayed on a left side of such a setting screen 121 in the drawing. Here, the description will be continued with an example in which the state display screen 123 is displayed at the same timing as the setting screen 121, but may be displayed at a different timing.

For example, the state display screen 123 may be configured to be displayed by the user operating a remote controller (not illustrated), and may be displayed at a timing desired by the user. For example, when the viewing position changes and the image quality or the sound quality is adjusted, the state display screen 123 may be displayed for a predetermined time in order to allow the user to recognize the change.

The state display screen 123 is a screen on which information regarding a state detected by the imaging device 12 at the time when the screen is displayed, a setting value (adjustment value) set on the basis of the information, and the like are displayed. On an upper side of the state display screen 123 illustrated in Fig. 8, an image indicating the position of the user detected by the imaging device 12 is displayed.

In the example illustrated in Fig. 8, two users are detected, and two points representing the respective users are displayed. This image includes a horizontal bar representing the television receiver 11, a fan-shaped line representing a range (detection range) imaged by the imaging device 12, and a point representing the user.

In a case where a plurality of users is detected, adjustment to be performed according to the viewing position of which user will be described above and below will be described.

In a case where a plurality of users is detected, the image quality and the sound quality can be configured not to be adjusted. Alternatively, in a case where a plurality of users is detected, a center of gravity is calculated from the detected viewing positions of the plurality of users, and image quality and sound quality are adjusted with the center of gravity as virtual viewing positions of the plurality of users.

Alternatively, in a case where a plurality of users is detected, one of the plurality of detected users, for example, a user closest to the television receiver or a user distant from the television receiver 11 is selected, and adjustment is performed on the selected user.

The image quality and the sound quality are adjusted with respect to one viewing position set by any one of these methods or another method not illustrated here. One viewing position set by such a method may also be displayed on the state display screen 123. For example, the viewing position may be displayed in a fan-shaped line in a color or a shape different from a point representing the user.

Three items "Picture Quality", "Voice Emphasis", and "Sound Balance" are displayed in a lower half of the state display screen 123. In these items, information regarding the setting value set at the time when the state display screen 123 is displayed, in other words, the setting value set at the viewing position of the user is displayed.

The "Picture Quality" is an item for displaying a setting state of adjustment related to image quality, and is displayed such that how much brightness or color density is set can be seen at the position of a point on a line segment. On a right side of the line segment, a numerical value representing a stage representing the setting value or the setting value, for example, in a case of representing in five stages, 5 is displayed when the intensity of adjustment is strong, and 1 is displayed when the intensity of adjustment is weak.

"Voice Emphasis" is an item for displaying a setting state of adjustment related to the Voice Zoom function, and display is performed such that how much intensity is set at a position of a point on a line segment, and a numerical value representing a set value or a stage representing the set value is displayed on a right side of the line segment.

The "Sound Balance" is an item for displaying a setting state of adjustment related to the balance between the left and right sides of the sound. L representing a left side is displayed on one of the line segments, R representing a right side is displayed on the other of the line segments, display is performed such that which of the left and right sides is set with what intensity at the position of a point on the line segment, and a numerical value representing a setting value or a stage representing the setting value is displayed on the right side of the line segment.

Such a state display screen 123 is displaced, so that the user can visually recognize that the optimum image quality and sound quality are set at the user's own viewing position (adjusted to the optimum image quality and sound quality at the user's own viewing position) automatically without bothering the user.

The processing of the flowchart described with reference to Fig. 5 is performed in a case where it is set to adjust the image quality and audio on the setting screen 121 as illustrated in Fig. 8.

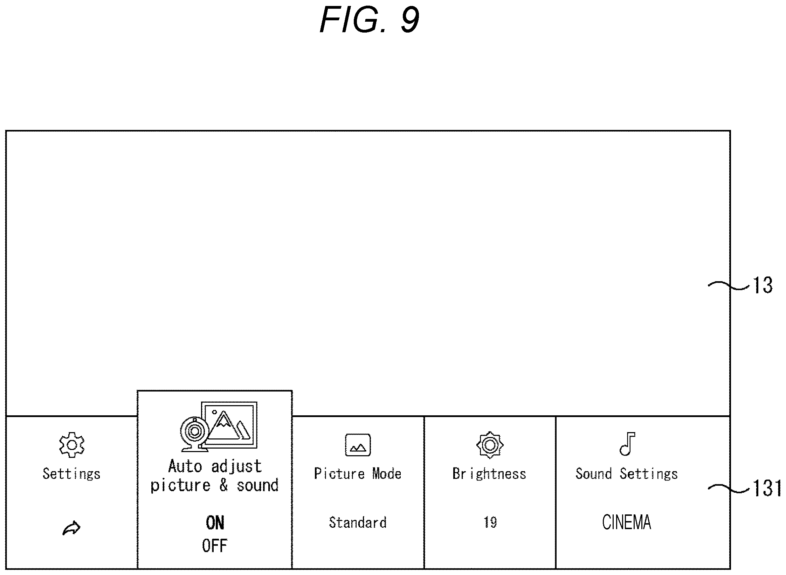

Setting of whether or not to adjust the image quality and the sound can also be performed on a screen as illustrated in Fig. 9. A setting screen 131 illustrated in Fig. 9 is a setting screen 131 displayed on the display unit 13 when a predetermined button of a remote controller (not illustrated) of the television receiver 11 is operated during viewing, and is a screen configured to enable various settings more easily than the setting screen 121 illustrated in Fig. 8.

On the setting screen 131 illustrated in Fig. 9, items such as "Settings", "Auto adjust picture & sound", "Picture Mode", "Brightness", and "Sound Settings" are displayed. Among these items, an item "Auto adjust picture & sound" is an item for setting whether or not to adjust the image quality or the sound quality according to the viewing position, and is configured such that setting (ON) or non-setting (OFF) can be selected.

When "ON" is set in the item "Auto adjust picture & sound", the processing of the flowchart described with reference to Fig. 5 is performed.

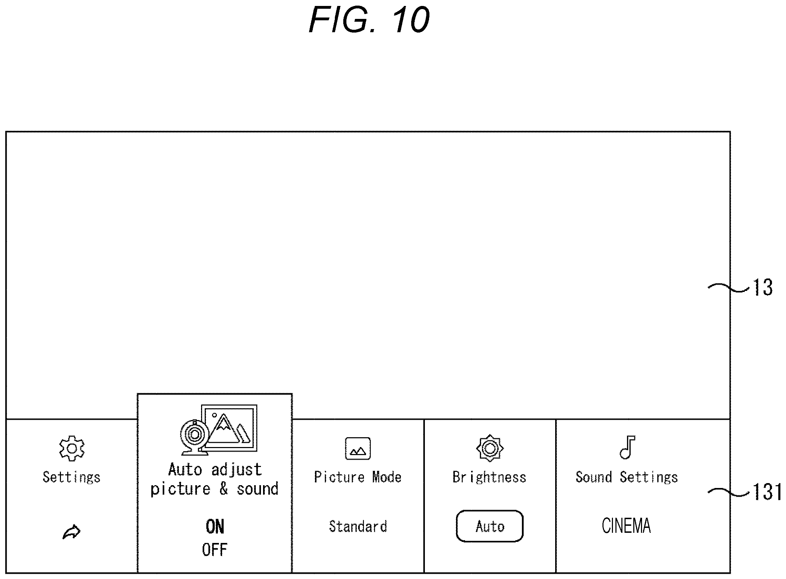

In a case where the item "Auto adjust picture & sound" is set to "ON", as illustrated in Fig. 10, a display such as "Auto" may be displayed on the item "Brightness" for setting brightness, and a display for causing the user to recognize that brightness control is being performed on the basis of the camera information from the imaging device 12. An item displayed as "Auto" may be an item that cannot be selected (cannot be set) and may be displayed to indicate that it cannot be selected, for example, displayed in gray out.

The processing of the flowchart described with reference to Fig. 5 is executed in a case where it is set on the setting screen 131 to adjust the image quality and the sound quality.

### <Adjustment of Sound Field and Location>

The description returns to the processing of the television receiver 11 with reference to the flowchart illustrated in Fig. 5. In step S34, the brightness and color density of the image according to the viewing position are adjusted by the processing as described above.

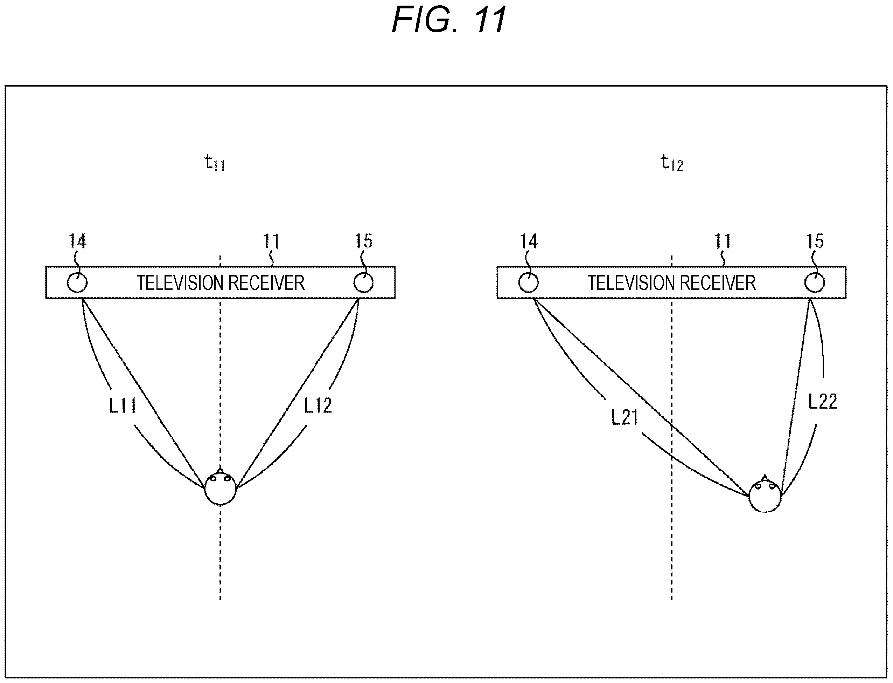

In step S35, processing of adjusting sound quality such as a sound field and localization of sound according to the viewing position is executed. As the adjustment of the sound field and localization of the sound, adjustment of the right and left balance of the sound and setting of the delay amount of the sound are performed. This will be described with reference to Fig. 11.

At time t11, the user is viewing from a substantially central position of the television receiver 11. The viewing position at the time t11 is such that a distance from the user to the left speaker 14 is a distance L11, a distance to the right speaker 15 is a distance L12, and the distance L11 and the distance L12 are substantially the same.

At time t12, the user views at a position shifted rightward from the center of the television receiver 11. In the viewing position at time t12, the distance from the user to the left speaker 14 is a distance L21, a distance to the right speaker 15 is a distance L22, and the distance L21 is longer than the distance L22.

Since the distance L11 and the distance L12 are the same distance at the viewing position at the time t11, the sound from the television receiver 11 is naturally heard without discomfort for the user by setting the volume of the left speaker 14 and the volume of the right speaker 15 to the same volume.

At the viewing position at the time t12, the distance L21 is longer than the distance L22. Therefore, if the volume of the left speaker 14 and the volume of the right speaker 15 are the same, the sound from the left speaker 14 may be heard smaller than the sound from the right speaker 15 and may be heard with a delay, and the sound from the television receiver 11 may be uncomfortable and may not be heard naturally.

As described above, there is a possibility that a difference occurs between the right and left in the volume and an arrival time of the sound provided to the user depending on the viewing position, and the user feels uncomfortable. Therefore, the volume and the arrival time suitable for the viewing position of the user are adjusted, and a natural sound that does not give the user a sense of discomfort can be provided.

In a situation such as time t12, there is a possibility that the sound from left speaker 14 may be heard smaller than the sound from right speaker 15. Therefore, the volume of the sound output from right speaker 15 is reduced, and the balance is adjusted so that the sound from left speaker 14 and the sound from right speaker 15 are heard at the same level at the user's viewing position.

Note that, here, in a case where there is a possibility that the sound from left speaker 14 can be heard smaller than the sound from right speaker 15, the description will be continued assuming that the volume of the sound output from right speaker 15 is lowered. However, adjustment may be performed by raising the volume of the sound output from left speaker 14.

In a case where there is a difference between the loudness of the sound from left speaker 14 and the loudness of the sound from right speaker 15, the volume of the sound from the left and right speakers is adjusted by decreasing the volume of the sound from the speaker on the side likely to be heard large or increasing the volume of the sound from the speaker on the side likely to be heard small.

In a situation like time t12, there is a possibility that the sound from the left speaker 14 reaches the user later than the sound from the right speaker 15. Therefore, in accordance with the arrival of the sound output from the left speaker 14, the sound from the right speaker 15 is delayed at the user's viewing position such that the sound from the right speaker 15 reaches the user, and the delay amount is adjusted such that the sound from the left speaker 14 and the sound from the right speaker 15 reach the user at the same time.

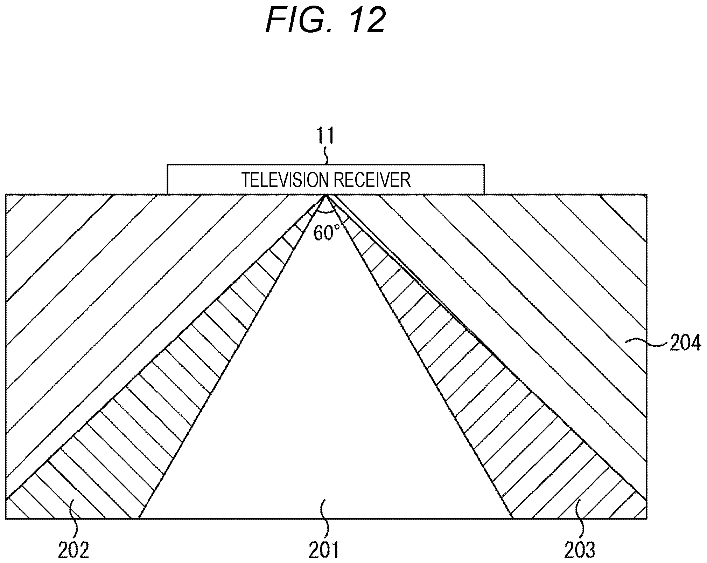

The adjustment of the balance can be performed, for example, by dividing the region as illustrated in Fig. 12 and determining in which region the viewing position is located. In the example illustrated in Fig. 12, an area within a range of an angle of 60 degrees at the center of the television receiver 11 is defined as a central region 201. A region on the left side of the central region 201 and within the imaging range of the imaging device 12 is defined as a left region 202. A region on the right side of the central region 201 and within the imaging range of the imaging device 12 is defined as a right region 203. A region outside the imaging range of the imaging device 12 existing on the left and right is defined as an out-of-range region 204.

In a case where the viewing position is located in the central region 201, the right and left balance is not adjusted. In a case where the viewing position is located in the left region 202, the volume of the sound output from the left speaker 14 is lowered by one to adjust the left-right balance. In a case where the viewing position is located in the right region 203, the volume of the sound output from the right speaker 15 is lowered by one to adjust the left-right balance.

Lowering the volume by one means lowering the volume by one as in the case where the user operates the volume button to lower the volume by one. When the volume is reduced by operating the remote controller of the user or the like, the volumes from both the left speaker 14 and the right speaker 15 are normally reduced by one equally, but in this process, only the volume from one speaker of the left speaker 14 or the right speaker 15 is reduced.

Here, it is described that the sound volume is lowered by one, but the sound volume to be lowered is not limited to one, and may be two or the like. In Fig. 12, the case where the region is divided into the central region 201, the left region 202, and the right region 203 has been described as an example, but the balance may be adjusted by further dividing the region.

In a case where the viewing position is located in the out-of-range area 204, the setting value set at the viewing position before the viewing position is moved to the out-of-range area 204 is used.

The adjustment of the balance is performed in a case where the adjustment using the camera information from the imaging device 12 is set by the user, which is the same as the above-described adjustment of the image quality. For example, in the setting screen as illustrated in Fig. 9, in a case where the setting is changed to the setting in which the adjustment is not performed by the user, the adjustment is performed with the setting value set at the time before the change.

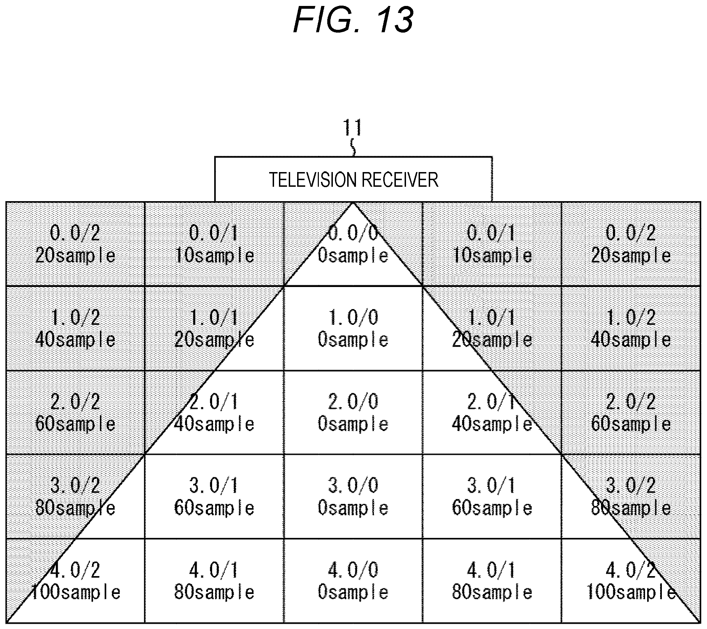

The adjustment of the delay amount can be performed, for example, by dividing the region into a mesh shape as illustrated in Fig. 13 and determining in which region the viewing position is located. The example illustrated in Fig. 13 illustrates a case where the region is divided into 25 regions of 5 × 5. In the example illustrated in Fig. 13, the position information and the delay amount are written in one region. In the drawing, a hatched triangular region indicates a region outside the imaging range of the imaging device 12 and corresponds to the out-of-range region 204 illustrated in Fig. 12.

For example, in an area located at the center in front of the television receiver 11, position information "0.0/0" and a delay amount "0 sample" are written. A numerical value before/in the position information of "0.0/0" represents coordinates in a vertical direction (vertical direction in the drawing), and represents a distance from the television receiver 11 to the viewing position. A numerical value after "/" represents a coordinate in a horizontal direction (left-right direction in the drawing), and is represented by a numerical value that increases by one every time the center of the television receiver 11 is shifted from the center by one area, where the center is 0.

For example, the region in which the position information of "1.0/0" and the delay amount of "0 sample" are written indicates that the viewing position is at a position 1 m away from the television receiver 11 and is at a position not shifted from the center of the television receiver 11 in the horizontal direction, and in a case where the viewing position is located in this region, the delay amount is 0 sample. In the example illustrated in Fig. 13, in a direction away from the television receiver 11, that is, the vertical direction, and in a region where the numerical value after/is 0, the delay amount is 0, and the delay amount is not adjusted.

For example, a region in which the position information of "1.0/1" and the delay amount of "20 sample" are written indicates that the viewing position is at a position 1 m away from the television receiver 11 and shifted by one region from the center of the television receiver 11 in the horizontal direction, and in a case where the viewing position is located in this region, the delay amount is 20 sample. Adjustment is made such that the sound output from the left speaker 14 is delayed by 20 sample and output in a case where the viewing position is shifted toward the left speaker 14 of the television receiver 11, and the sound output from the right speaker 15 is delayed by 20 sample and output in a case where the viewing position is shifted toward the right speaker 15 of the television receiver 11.

For example, the region in which the position information of "1.0/2" and the delay amount of "40 sample" are written indicates that the viewing position is at a position 1 m away from the television receiver 11 and shifted by 2 regions from the center of the television receiver 11 in the horizontal direction, and in a case where the viewing position is located in this region, the delay amount is 40 sample.

The region having the position information of "1.0/2" corresponds to the out-of-range region 204, and as will be described later, the delay amount is not adjusted. If the delay amount is to be adjusted, and the viewing position is shifted toward the left speaker 14 of the television receiver 11, the sound output from the left speaker 14 is delayed 40 sample and output. Furthermore, in a case where the viewing position is shifted toward the right speaker 15 of the television receiver 11, adjustment is performed such that the sound output from the right speaker 154 is delayed by 40 sample and output.

As described above, the delay amount is adjusted such that the larger the deviation from the center of the television receiver 11 in the lateral direction, the larger the delay amount.

The table as illustrated in Fig. 13 may be held as a table by the sound control unit 42 (Fig. 3), and the delay amount may be adjusted by appropriately referring to the table. Alternatively, the sound control unit 42 (Fig. 3) may be configured to adjust the delay amount by holding a predetermined arithmetic expression and appropriately performing calculation using the arithmetic expression.

The numerical values illustrated in Fig. 13 are merely examples, and are not intended to be limiting. Similarly to the adjustment of the balance described above, in a case where the viewing position is located outside the imaging range of the imaging device 12, the setting value adjusted at the viewing position before the viewing position moves outside the imaging range is used. The adjustment of the delay amount is also performed in a case where the adjustment using the camera information from the imaging device 12 is set by the user, which is the same as the above-described image quality adjustment. For example, in the setting screen as illustrated in Fig. 9, in a case where the setting is changed to the setting in which the adjustment is not performed by the user, the adjustment is performed with the setting value set at the time before the change.

In a case where such sound adjustment is executed, when the viewing position is changed, control may be performed such that the value gradually changes from the setting value set at a point in time before the viewing position is changed to the setting value set at a later point in time, or control may be performed such that the value is changed at once.

### <Adjustment of Speech Enhancement>

The description returns to the processing of the television receiver 11 with reference to the flowchart illustrated in Fig. 5. In step S35, the adjustment of the balance of the sounds from the left and right speakers according to the viewing position and the adjustment of the delay amount are performed by the processing as described above.

In step S36, adjustment regarding the hearing according to the viewing position is performed. The adjustment related to the hearing is adjustment related to the function described as the Voice Zoom function in the description with reference to the setting screen 121 illustrated in Fig. 8. The Voice Zoom function is a function of emphasizing a speech sound more than other sounds and making it easier to hear a speech content. Note that, here, a case where the speech content is a function that is easy to hear will be described as an example, but the present technology can be applied to adjustment such as emphasizing sound other than the speech than other sounds so as to obtain a way of hearing reflecting the user's preference.

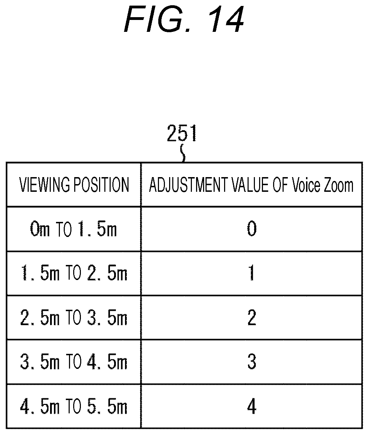

The sound control unit 42 (Fig. 3) holds a table 251 as illustrated in Fig. 14, for example, and refers to the table as necessary to adjust a setting value related to the Voice Zoom function. The table 251 is a table in which a viewing position and an adjustment value of Voice Zoom are associated with each other.

An adjustment value of "0" is associated with the viewing position of "0 m to 1.5 m", and an adjustment value of "2" is associated with the viewing position of "1.5 m to 2.5 m". An adjustment value of "3" is associated with the viewing position of "2.5 m to 3.5 m", and an adjustment value of "4" is associated with the viewing position of "3.5 m to 4.5 m".

As described above, when the viewing position is farther from the television receiver 11, the table 251 in which the adjustment value increases is referred to, and the speech enhancement is adjusted by the Voice Zoom function.

The adjustment value described in the table 251 is a value to be used as a value to be added or multiplied to a setting value set in advance to be used in a case where the Voice Zoom function is turned on.

For example, in a case where it is set that the setting value A is used in a case where the Voice Zoom function is set to be turned on by the user, and it is further set that adjustment by the viewing position is performed, the adjustment value associated with the viewing position is read from the table 251, and calculation based on a predetermined arithmetic expression such as addition to or multiplication by the setting value A is performed, and the calculation result is used as the setting value for executing the Voice Zoom function according to the viewing position.

The adjustment value described in the table 251 may be a value itself set as a function of Voice Zoom. For example, in a case where it is set by the user that the Voice Zoom function is turned on and it is further set to perform adjustment by the viewing position, a value associated with the viewing position is read from the table 251 and used as a setting value for realizing the Voice Zoom function.

When the viewing position of the user is farther from the television receiver 11, sound is attenuated, and there is a possibility that the effect of speech enhancement (voice enhancement processing) by the Voice Zoom function is diminished. However, adjustment is performed according to the viewing position as described above, so that the effect by the Voice Zoom function can be obtained regardless of the viewing position of the user.

Only one of the voice enhancement processing and the volume adjustment by the Voice Zoom function can be performed, or both can be performed. For example, in a case where the viewing distance is a predetermined distance or more, the volume may be adjusted instead of the audio enhancement processing by the Voice Zoom function. When the way of hearing is adjusted too much only by the Voice Zoom function, there is a possibility that excessive sound is generated. However, in a case where the viewing distance becomes a predetermined distance or more, the sound can be naturally heard by adjusting the volume.

The numerical values illustrated in Fig. 14 are merely examples, and are not intended to be limiting. Similarly to the image quality adjustment described above, in a case where the viewing position is located outside the imaging range of the imaging device 12, the adjusted setting value adjusted at the viewing position before the viewing position moves outside the imaging range is used. The adjustment related to the Voice Zoom function is also performed in a case where the adjustment using the camera information from the imaging device 12 is set by the user, which is the same as the above-described image quality adjustment. For example, in the setting screen as illustrated in Fig. 9, in a case where the setting is changed to the setting in which the adjustment is not performed by the user, the adjustment is performed with the setting value set at the time before the change.

In a case where such adjustment of the Voice Zoom function is executed, when the viewing position has been changed, control may be performed such that a value gradually changes from a setting value set at a point in time before the viewing position is changed to a setting value set at a later point in time, or control may be performed such that the value is changed at once.

The description returns to the description with reference to the flowchart illustrated in Fig. 5.

When the image quality is adjusted according to the viewing position in step S34, the image control unit 41 starts control of the image quality based on the adjustment. In step S35, when the adjustment of the sound field and localization according to the viewing position is performed, control of the sound quality based on the adjustment is started by the sound control unit 42. When the adjustment of the Voice Zoom function (speech enhancement) according to the viewing position is performed in step S36, the control of the speech enhancement based on the adjustment is started by the sound control unit 42.

As described above, in a case where the viewing position of the user has been changed, processing of providing an image or sound with image quality or sound quality suitable for the changed viewing position is executed.

### <Processing in Camera Power Saving Mode>

On the other hand, in a case where it is determined in step S33 that the user is not in the viewing state, the processing proceeds to step S37. In step S37, a setting for reducing power consumption (appropriately described as a camera power saving mode) is performed.

In a case where it is determined that the user is not viewing the television receiver 11, the mode is shifted to a camera power saving mode in which the power consumption is reduced by reducing the luminance of the display unit 13 to darken.

The determination that the user is not viewing the television receiver 11 is made when the user moves from the front of the television receiver 11 and is not captured by the imaging device 12, or when the line of sight of the user is off the television receiver 11.

In a case where a state in which it is determined that the user is not viewing the television receiver 11 is continued for a certain period of time, the luminance of the display unit 13 is reduced, and the mode shifts to the camera power saving mode. After shifting to the camera power saving mode, in a case where a state in which it is determined that the user is not viewing the television receiver 11 is further continued for a certain period of time, the display of the display unit 13 may be turned off (erased).

In a case where a state in which it is determined that the user is not viewing the television receiver 11 is further continued for a certain period of time, the power of the television receiver 11 may be turned off.

In addition, in a case where it is determined that the user is not in a state of viewing for a certain period of time, it is possible to adopt a configuration in which the image is erased without going through the power saving mode or a configuration in which the power is turned off.

In the camera power saving mode, the image control unit 41 controls display with reduced luminance on the display unit 13, and the sound control unit 42 performs control while maintaining a state before shifting to the camera power saving mode. Alternatively, the sound control unit 42 may perform control to reduce the sound.

In a case where it is determined that the user resumes viewing in the camera power saving mode, the camera power saving mode is canceled, and the brightness of the display unit 13 is returned to the original brightness.

There is a television receiver 11 having a function of turning off the power of the television receiver 11 in a case where the user does not perform a predetermined operation of changing a channel or a volume or switching an input only for a predetermined time, which is referred to as a non-operation power off function here.

In the television receiver 11 having such a non-operation power OFF function, in a case where the non-operation power OFF function is set by the user when the non-operation power OFF function is executed, the power is turned off according to the non-operation power OFF function when the non-operation time elapses by the set time, but the power may not be turned off when the imaging device 12 determines that the user is in the state of viewing, for example, when the user is imaged.

As described above, the user is imaged by the imaging device 12, and it is determined whether or not the user is in a state of viewing the television receiver 11. In a case where it can be determined that the user is viewing the television receiver 11 by using the determination result of the determination, it is also possible to perform control so as not to perform power-off by the non-operation power-off function.

A mode for reducing the power consumption of the television receiver 11 by the user, hereinafter referred to as a user setting power saving mode, may be prepared. For example, in a case where the user set power consumption mode is set to "strong", the power consumption is reduced by displaying the display unit 13 in a state where the luminance is always lowered. Furthermore, for example, in a case where the user set power consumption mode is set to "weak", the luminance of the display unit 13 is set to a value that is higher than that in a case where the user set power consumption mode is set to "strong", but lower than usual, so that power consumption is reduced.

In a case where such a user setting power saving mode is set to "strong", the setting as to whether or not to use the function of the camera power saving mode using the camera information from the imaging device 12 cannot be changed on the user side.

In a case where the user setting power saving mode is set to "strong", the luminance of the display unit 13 is lowered. This state is the same as the camera power saving mode, that is, the state in which the brightness of the display unit 13 is lowered in the above example. Therefore, in a case where the user setting power saving mode is set to "strong", even if the camera power saving mode is turned on, the effect cannot be obtained, and thus the on/off state of the function of the camera power saving mode is set not to be changed.

In a case where the user setting power saving mode is set to "weak" or "off", while the brightness of the display unit 13 is lowered by the camera power saving mode, the setting value of the user setting power saving mode is fixed to "strong", and a state in which a change by the user is not accepted is obtained. In a case where it is determined that the viewing by the user is resumed, the camera power saving mode is canceled, and the brightness of the display unit 13 is returned to the original brightness, the setting of the user set power consumption mode is returned to the setting (strong, weak, or cut state) set by the user.

Note that, in the case where the camera power saving mode is "off", the set value in the user setting power saving mode is not changed by the camera power saving mode.

In step S37 (Fig. 5), such setting for reducing power consumption is performed.

As described with reference to the flowchart illustrated in Fig. 5, in a case where the user is in a state of viewing on the basis of the camera information from the imaging device 12, the television receiver 11 performs appropriate adjustment so that image quality and sound quality corresponding to the viewing position of the user are provided to the user. In addition, in a case where a state in which the user is not viewing is detected from the camera information from the imaging device 12, the television receiver 11 performs processing of reducing the power consumption of the television receiver 11.

According to the present technology, it is possible to provide an image with optimum image quality according to a viewing position of a user and to provide sound with optimum sound quality. According to the present technology, power consumption can be reduced according to the viewing state of the user.

### <Recording Medium>

The above-described series of processes can be performed by hardware or software. In a case where the series of processing is executed by software, a program forming the software is installed in a computer. Here, examples of the computer include a computer incorporated in dedicated hardware, and a general-purpose personal computer capable of executing various functions by installing various programs, for example.

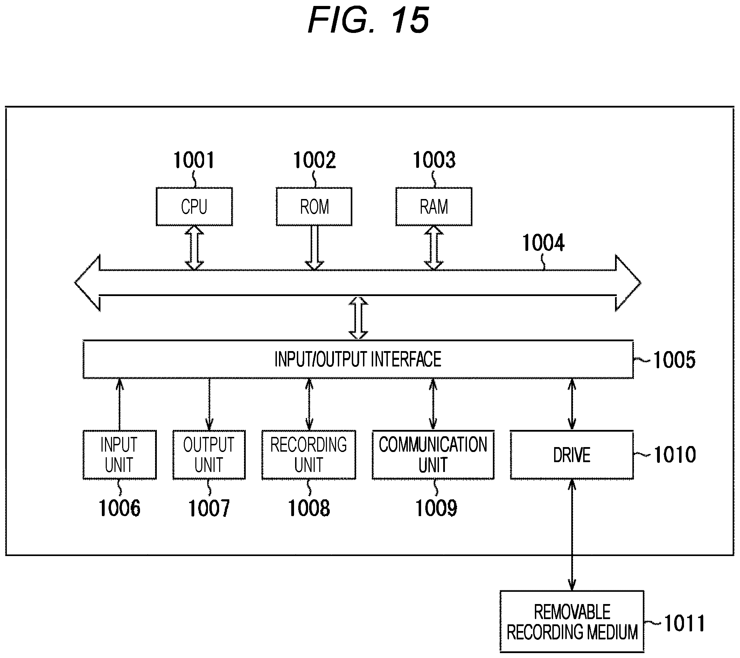

Fig. 15 is a block diagram illustrating a configuration example of hardware of a computer that executes the above-described series of processing by a program. In the computer, a central processing unit (CPU) 1001, a read only memory (ROM) 1002, and a random access memory (RAM) 1003 are mutually connected by a bus 1004. The bus 1004 is further connected with an input/output interface 1005. An input unit 1006, an output unit 1007, a storage unit 1008, a communication unit 1009, and a drive 1010 are connected to the input/output interface 1005.

The input unit 1006 includes a keyboard, a mouse, a microphone and the like. The output unit 1007 includes a display, a speaker, and the like. The storage unit 1008 includes a hard disk, a nonvolatile memory, and the like. The communication unit 1009 includes a network interface or the like. The drive 1010 drives a removable medium 1011 such as a magnetic disk, an optical disc, a magnetooptical disk, or a semiconductor memory.

In the computer configured as described above, for example, the CPU 1001 loads the program stored in the storage unit 1008 into the RAM 1003 via the input/output interface 1005 and the bus 1004 and executes the program, to thereby perform the above-described series of processing.

The program to be executed by the computer (the CPU 1001) may be recorded in the removable medium 1011 as a package medium or the like to be provided, for example. Furthermore, the program may be provided via a wired or wireless transmission medium, such as a local area network, the Internet, or digital satellite broadcasting.

In the computer, the removable medium 1011 is mounted in the drive 1010, so that the program can be installed into the storage unit 1008 via the input/output interface 1005. Also, the program may be received by the communication unit 1009 by means of the wired or wireless transmission medium to be installed on the storage unit 1008. In addition, the program can be installed in the ROM 1002 or the storage unit 1008 in advance.

Note that the program executed by the computer may be a program that executes processing in time series in the order described herein, or a program that executes processing in parallel or at a necessary timing such as when a call is made.

In the present specification, the system represents the entire device including a plurality of devices.

It should be noted that the effects described in the present specification are merely illustrative and not restrictive, and may have additional effects.

It should be noted that embodiments of the present technology are not limited to the abovementioned embodiment, and various modifications are possible without departing from the gist of the present technology.

Note that the present technology may also have the following configurations.
(1) An information processing device including:
   a control unit that determines and controls an adjustment amount of at least one of an image quality of a display unit and a sound quality of a speaker on a basis of information regarding a viewing position of a user acquired from an imaging device.
(2) The information processing device according to the above (1), in which
   the image quality is adjusted to a luminance corresponding a changed viewing position in a case where the viewing position is changed.
(3) The information processing device according to the above (2), in which
   the luminance of the display unit is increased in a case where the changed viewing position becomes farther than the viewing position before the change, and the luminance is decreased in a case where the changed viewing position becomes closer.
(4) The information processing device according to any one of the above (1) to (3), in which
   the image quality is adjusted to saturation corresponding to the changed viewing position in a case where the viewing position is changed.
(5) The information processing device according to the above (4), in which
   the saturation of the display unit is increased in a case where the changed viewing position becomes farther than the viewing position before the change, and the saturation is decreased in a case where the changed viewing position becomes closer.
(6) The information processing device according to any one of the above (1) to (5), in which
   in a case where the viewing position is changed, a balance of sounds from left and right speakers according to the changed viewing position is adjusted.
(7) The information processing device according to the above (6), in which
   the adjustment of the balance of the sounds from the left and right speakers is adjustment of lowering the volume of the sound output from the speaker having a shorter distance between the user and the speaker or adjustment of raising the volume of the sound output from the speaker having a longer distance between the user and the speaker.
(8) The information processing device according to any one of the above (1) to (7), in which
   a delay amount of sounds from the left and right speakers is adjusted according to the changed viewing position in a case where the viewing position is changed.
(9) The information processing device according to the above (8), in which
   the adjustment of the delay amount of the sounds from the left and right speakers is adjustment for delaying the sound output from the speaker having a shorter distance between the user and the speaker.
(10) The information processing device according to any one of the above (1) to (9), in which
   a value related to voice processing of emphasizing a speech is adjusted according to the viewing position, and the voice processing is controlled with the adjusted value.
(11) The information processing device according to any one of the above (1) to (10), in which
   adjustment is performed to reduce luminance of the display unit in a case where a state in which the user is not viewing is detected.
(12) The information processing device according to any one of the above (1) to (11), in which
   adjustment is performed to reduce luminance of the display unit in a case where it is detected that the user has moved out of an imaging range by the imaging device.
(13) The information processing device according to any one of the above (1) to (12), in which
   a screen including at least one of the viewing position of the user detected by the imaging device and the adjustment amount is displayed on the display unit.
(14) The information processing device according to any one of the above (1) to (13), further including
   a sensor that detects ambient light, in which
   the image quality is adjusted by using one or both of the adjustment of the image quality based on the intensity of the ambient light detected by the sensor and the adjustment of the image quality based on the information from the imaging device.
(15) The information processing device according to any one of the above (1) to (14), in which
   the imaging device is configured to be detachably attached.
(16) The information processing device according to any one of the above (1) to (15), in which
   in a case where a plurality of users is detected, the image quality and the sound quality that are optimal at the center of gravity of the viewing positions of the plurality of users are adjusted.
(17) The information processing device according to any one of the above (1) to (15), in which
   in a case where a plurality of users is detected, the image quality and the sound quality are adjusted to be optimal for a user at a viewing position closest to the information processing device among the plurality of users.
(18) The information processing device according to any one of the above (1) to (17), in which
   the control unit adjusts image quality corresponding to peripheral light or a reflection of a peripheral object on the display unit on a basis of the information acquired from the imaging device.
(19) An information processing method for causing an information processing device to perform:
   determining an adjustment amount of at least one of an image quality of the display unit and a sound quality of a speaker on a basis of information regarding a viewing position of a user acquired from an imaging device; and
   controlling the display unit and the speaker using the adjustment amount.
(20) A program for causing a computer to execute processing including the steps of:
   determining an adjustment amount of at least one of an image quality of a display unit and a sound quality of a speaker on a basis of information regarding a viewing position of a user acquired from an imaging device; and
   controlling the display unit and the speaker using the adjustment amount.

### REFERENCE SIGNS LIST

- 11: Television receiver
- 12: Imaging device
- 13: Display unit
- 14: Left speaker
- 15: Right speaker
- 16: Sensor
- 22: Distance
- 31: Control unit
- 32: Information acquisition unit
- 41: Image control unit
- 42: Sound control unit
- 101: Table
- 121: Setting screen
- 123: State display screen
- 131: Setting screen
- 201: Central region
- 202: Left region
- 203: Right region
- 204: Out-of-range region
- 251: Table

## Claims

1. An information processing device comprising:
a control unit that determines and controls an adjustment amount of at least one of an image quality of a display unit and a sound quality of a speaker on a basis of information regarding a viewing position of a user acquired from an imaging device.

2. The information processing device according to claim 1, wherein
the image quality is adjusted to a luminance corresponding a changed viewing position in a case where the viewing position is changed.

3. The information processing device according to claim 2, wherein
the luminance of the display unit is increased in a case where the changed viewing position becomes farther than the viewing position before the change, and the luminance is decreased in a case where the changed viewing position becomes closer.

4. The information processing device according to claim 1, wherein
the image quality is adjusted to saturation corresponding to the changed viewing position in a case where the viewing position is changed.

5. The information processing device according to claim 4, wherein
the saturation of the display unit is increased in a case where the changed viewing position becomes farther than the viewing position before the change, and the saturation is decreased in a case where the changed viewing position becomes closer.

6. The information processing device according to claim 1, wherein
in a case where the viewing position is changed, a balance of sounds from left and right speakers according to the changed viewing position is adjusted.

7. The information processing device according to claim 6, wherein
the adjustment of the balance of the sounds from the left and right speakers is adjustment of lowering the volume of the sound output from the speaker having a shorter distance between the user and the speaker or adjustment of raising the volume of the sound output from the speaker having a longer distance between the user and the speaker.

8. The information processing device according to claim 1, wherein
a delay amount of sounds from the left and right speakers is adjusted according to the changed viewing position in a case where the viewing position is changed.

9. The information processing device according to claim 8, wherein
the adjustment of the delay amount of the sounds from the left and right speakers is adjustment for delaying the sound output from the speaker having a shorter distance between the user and the speaker.

10. The information processing device according to claim 1, wherein
a value related to voice processing of emphasizing a speech is adjusted according to the viewing position, and the voice processing is controlled with the adjusted value.

11. The information processing device according to claim 1, wherein
adjustment is performed to reduce luminance of the display unit in a case where a state in which the user is not viewing is detected.

12. The information processing device according to claim 1, wherein
adjustment is performed to reduce luminance of the display unit in a case where it is detected that the user has moved out of an imaging range by the imaging device.

13. The information processing device according to claim 1, wherein
a screen including at least one of the viewing position of the user detected by the imaging device and the adjustment amount is displayed on the display unit.

14. The information processing device according to claim 1, further comprising
a sensor that detects ambient light, wherein
the image quality is adjusted by using one or both of the adjustment of the image quality based on the intensity of the ambient light detected by the sensor and the adjustment of the image quality based on the information from the imaging device.

15. The information processing device according to claim 1, wherein
the imaging device is configured to be detachably attached.

16. The information processing device according to claim 1, wherein
in a case where a plurality of users is detected, the image quality and the sound quality that are optimal at the center of gravity of the viewing positions of the plurality of users are adjusted.

17. The information processing device according to claim 1, wherein
in a case where a plurality of users is detected, the image quality and the sound quality are adjusted to be optimal for a user at a viewing position closest to the information processing device among the plurality of users.

18. The information processing device according to claim 1, wherein
the control unit adjusts image quality corresponding to peripheral light or a reflection of a peripheral object on the display unit on a basis of the information acquired from the imaging device.

19. An information processing method for causing an information processing device to perform:
determining an adjustment amount of at least one of an image quality of a display unit and a sound quality of a speaker on a basis of information regarding a viewing position of a user acquired from an imaging device; and
controlling the display unit and the speaker using the adjustment amount.

20. A program for causing a computer to execute processing comprising the steps of:
determining an adjustment amount of at least one of an image quality of a display unit and a sound quality of a speaker on a basis of information regarding a viewing position of a user acquired from an imaging device; and
controlling the display unit and the speaker using the adjustment amount.
